Europäisches Patentamt

**European Patent Office**

Office européen des brevets

(19)

(11) Numéro de publication:  **0 095 424**

**A1**

(12)

# DEMANDE DE BREVET EUROPEEN

(21) Numéro de dépôt: 83401043.1

(22) Date de dépôt: 25.05.83

(51) Int. Cl.³: **F 16 K 31/24**
**F 16 K 7/16, F 16 K 47/02**

(30) Priorité: 25.05.82 FR 8209031

(43) Date de publication de la demande:
30.11.83 Bulletin 83/48

(84) Etats contractants désignés:
AT BE CH DE GB IT LI LU NL SE

(71) Demandeur: **Ragot, Claude**
**Place du 11 Novembre**
**F-56500 Locmine(FR)**

(71) Demandeur: **ETABLISSEMENTS CLAUDE RAGOT**
**Société dite:**
**Place du 11 Novembre**
**F-56500 Locmine(FR)**

(72) Inventeur: **Ragot, Claude**
**Place du 11 novembre**
**F-56500 Locmine(FR)**

(74) Mandataire: **Bonnetat, Christian et al,**
**Cabinet PROPI Conseils 23 rue de Léningrad**
**F-75008 Paris(FR)**

(54) Robinet à membrane notamment pour l'alimentation d'un réservoir.

(57) L'invention concerne un robinet à membrane notamment pour l'alimentation d'un réservoir.

Le robinet comporte une membrane souple (13) formant une poche dans laquelle débouche l'extrémité d'une tubulure (6) débitant le fluide et raccordée à la canalisation d'alimentation amont (3) la section terminale de ladite tubulure forme le siège récepteur de l'obturateur constitué par une zone de ladite membrane en forme de poche (13), ladite poche élastiquement déformable constituant en position d'ouverture, une enceinte (17) d'écoulement dans laquelle est débité le fluide par l'extrémité de la tubulure (6) et ladite poche comporte une solution de continuité (20) pour l'échappement aval du fluide vers la descente (11) garnie d'un chemisage élastoplastique antiphonique.

Application à la réalisation d'un robinet silencieux pour l'alimentation d'un réservoir à flotteur par exemple réservoir de chasse d'eau.

.../...

Fig. 1

Robinet à membrane notamment pour l'alimentation d'un réservoir.

La présente invention concerne un robinet du type comportant, dans un corps de robinet, un siège coopérant avec un obturateur formé d'une membrane élastiquement déformable et déplaçable par rapport audit siège, par l'intermédiaire d'un poussoir depuis l'extérieur du corps de robinet.

L'invention concerne plus particulièrement un robinet remarquable par ses propriétés et ses caractéristiques de fonctionnement silencieux et utilisable notamment pour équiper un réservoir de chasse d'eau.

Les réservoirs de chasse d'eau fonctionnement généralement par une commande à flotteur telle que le déplacement du flotteur en fin de remplissage commande un poussoir appliquant l'obturateur sur son siège et interrompant ainsi le débit d'eau.

Ces dispositifs présentent traditionnellement l'inconvénient bien connu d'être particulièrement bruyants et tout au long de la période de remplissage du réservoir il se produit une émission sonore sous forme de sifflement ou chuintement ou bruits liquides, qui représente un désagrément dans les habitations.

Certains dispositifs visent à remédier à cet inconvénient en prévoyant notamment une conformation particulière du flotteur telle que le mouvement du flotteur, au lieu de se faire régulièrement et de façon continue, est provoqué brutalement, la forme donnée au flotteur permettant, en fin de remplissage du réservoir, le déplacement de la poussée d'Archimède en entraînant le basculement instantané du flotteur et la fermeture pratiquement immédiate; ce qui raccourcit d'une part la période de remplissage, et d'autre part évite le phénomène désagréable des sifflements s'éteignant

2

0095424

lentement en fin de remplissage, au fur et à mesure que l'obturateur se referme sous la montée régulièrement progressive du flotteur.

Il reste que les robinets actuels restent bruyants et provoquent une transmission sonore importante dans les appartements.

On a tenté de remédier à cet inconvénient en provoquant le déversement de l'eau à l'intérieur du réservoir par un tube plongeant et rejoignant la base du réservoir, ce tube conduisant l'écoulement des filets de liquide en évitant une partie de l'effet de chute libre à l'intérieur du réservoir; toutefois, les règlements sanitaires prévoient une mise à l'air libre du sommet du tube vertical, de sorte que le tube qui est lui-même l'objet de résonance sous l'effet de l'écoulement du fluide, transmet vers l'extérieur les vibrations qui se traduisent par des ondes sonores désagréables.

La présente invention vise à remédier à ces inconvénients et permet de réaliser un robinet apte notamment à équiper un dispositif d'alimentation d'un réservoir (tel qu'un réservoir de chasse d'eau d'une installation de toilette) et dont l'émission sonore en cours de fonctionnement est considérablement réduite, voire négligeable par rapport aux dispositifs de l'art antérieur connus.

Le dispositif de l'invention permet en outre un fonctionnement en toute sécurité et il est conforme aux règlements sanitaires concernant la nécessité d'une mise à l'air libre entre la masse d'eau contenue dans le réservoir et l'obturation afin d'éviter tout phénomène de rétro-siphonnage en cas de défaillance de l'obturateur conjuguée avec une dépression dans la conduite d'alimenta-tion.

**0095424**

A cet effet, l'invention concerne un robinet à fonctionnement silencieux, caractérisé en ce que le corps du robinet comporte une membrane souple en forme de poche en matériau élastiquement déformable, dans laquelle débouche l'extrémité d'une tubulure débitant le fluide et raccordée à la canalisation d'alimentation amont, ladite poche élastiquement déformable constituant une enceinte d'écoulement dans laquelle est débité le fluide par l'extrémité de la tubulure, et ladite poche comporte une solution de continuité pour l'échappement aval du fluide.

Ainsi, et selon cette première caractéristique de l'invention, le fluide issu et débouchant du siège pénètre en premier lieu dans une enceinteconstituant une chambre d'écoulement ou chambre d'expansion formée d'une paroi souple et dont il s'échappe, par une ouverture calibrée, la paroi souple évitant déjà, en majeure partie, la transmission et la formation d'ondes sonores susceptibles de se transmettre vers l'extérieur par le dispositif et notamment par le corps de robinet.

Selon une autre caractéristique de l'invention,l'ouverture d'échappement pratiquée dans la membrane en forme de poche est disposée perpendiculairement par rapport à l'axe d'écoulement du fluide défini par la tubulure qui constitue le siège de la membrane d'obturation.

Selon une caractéristique plus particulière, la tubulure constituant le siège du robinet est prévue d'axe sensiblement horizontal et l'ouverture d'échappement disposée dans la membrane en forme de poche est disposée à la base constituant la partie inférieure de ladite poche et elle est positionnée face à l'ouverture supérieure d'un tube vertical débouchant à la base du récipient à alimenter et destiné à guider l'écoulement vertical du fluide en remplissant le récipient.

Selon encore une autre caractéristique, le tube vertical de sortie et conduisant à la base du récipient à alimenter est chemisé intérieurement par un revêtement en matériau à propriété d'isolation phonique, par exemple en matériau élastiquement déformable tel qu'une résine élastomère.

Selon encore une caractéristique de l'invention, la membrane d'obturation en forme de poche a la forme générale d'un corps de révolution, par exemple cylindrique, concentrique et extérieur à la tubulure formant le siège du robinet, ladite poche étant refermée par un fond comportant une paroi renforcée et constituant la zone située face au siège formé par la section ouverte de ladite tubulure, les bords libres de la poche, du côté opposé au fond d'obturation, étant solidaires d'un disque concentrique et solidaires de la tubulure centrale en refermant ainsi l'enceinte d'écoulement du fluide constituée par ladite poche.

Selon une autre caractéristique de l'invention, la membrane d'obturation élastiquement déformable et en forme de poche est disposée à l'intérieur d'un corps de robinet conformant une chambre contenant et entourant à faible distance ladite membrane en forme de poche,

5

0095424

et ladite chambre d'une part et ladite membrane d'autre part sont conformées et dimensionnées de telle façon qu'à l'état de repos, la membrane étant en appui sur son siège et le robinet étant ainsi en position de fermeture, la membrane en forme de poche est maintenue écartée de la paroi intérieure de ladite chambre, tandis qu'à l'état d'ouverture, la membrane étant libérée de sa position d'appui sur son siège, et le liquide s'écoulant, ladite membrane est dilatée et plaquée par la pression du fluide, contre la paroi intérieure de ladite chambre, et la chambre comporte un passage communiquant avec l'atmosphère, ledit passage étant obturé par la membrane élastique lorsque cette dernière est amenée en position dilatée lors de l'ouverture du robinet, le passage communiquant avec l'atmosphère constituant un dispositif antiretour et évitant le rétrosiphonnage du liquide contenu dans le récipient alimenté par le robinet.

Plus particulièrement la tubulure d'écoulement dont la section terminale constitue le siège récepteur de la membrane élastique d'obturation comporte des ailettes radiales s'étendant l'ongitudinalement depuis ladite tubulure et dont les bords longitudinaux constituent des surfaces d'appui de la membrane élastique d'obturation à l'état de repos.

Selon une caractéristique plus particulière, la membrane d'obturation est commandée par un poussoir traversant le corps de robinet et actionné depuis l'extérieur, le poussoir étant déplaçable linéairement selon un axe situé dans le prolongement de l'axe de la tubulure d'écoulement formant le siège du robinet, le poussoir étant apte à porter par son extrémité disposée à l'intérieur du corps du robinet contre la partie renforcée du fond de la poche formant la membrane élastique d'obturation pour amener ce fond d'obturation en position d'appui sur le siège.

Selon encore une autre caractéristique la chambre formée par le corps de robinet et contenant la tubulure siège et la membrane élastique d'obturation a une forme biconique et le cercle central constituant la base commune des deux cônes opposés comporte en partie supérieure le passage de mise à l'air libre et en partie inférieure le débouché du tube formant canal conduisant au fond du récipient.

Selon encore une autre caractéristique, la membrane élastique d'obturation comporte, face au passage supérieur de mise à l'air libre de la chambre contenant ladite membrane, une zone apte à constituer obturation dudit passage et formée d'une partie centrale formant pastille d'obturation séparée du corps de la membrane par une rainure circulaire constituée d'un voile de matière raccordée d'une part au corps de la membrane vers l'extérieur et ladite pastille vers l'intérieur, la rainure circulaire ayant une section en forme générale de V ou de U et étant d'épaisseur inférieure au corps de la membrane, en permettant un mouvement élastique autonome de ladite pastille d'obturation centrale par rapport au corps de la membrane vers sa position d'obturation contre l'ouverture dudit passage.

D'autres caractéristiques et avantages de l'invention ressortiront encore de la description qui suit et qui est donnée en rapport avec une forme de réalisation particulière présentée à titre d'exemple non limitatif et en se référant aux dessins annexés.

La figure 1 est une vue en coupe verticale du robinet à l'état de repos, et sans alimentation de fluide sous pression.

La figure 2 est une vue du robinet en position de remplissage du réservoir, le robinet étant ouvert et raccordé à la tubulure d'alimentation sous pression.

La figure 3 est une vue du même robinet en position de fermeture.

La figure 4 est une vue d'une variante montrant sur le corps de robinet et au débouché du passage de mise à l'air libre, un dispositif "casse-vide" visant à éviter une évacuation parasite du liquide.

La figure 5 montre une vue en coupe longitudinale d'une variante de réalisation d'une membrane élastiquement déformable selon une coupe longitudinale.

La figure 6 montre la membrane de la figure 5 selon une coupe transversale.

Selon l'ensemble des figures, le robinet ici représenté est destiné à alimenter un réservoir 1 et il est positionné en appui sur la paroi 2 de ce réservoir traversé par le tuyau d'arrivée 3 avec interposition de joints d'étanchéité 4 et 5.

Dans le tuyau d'arrivée 3 (qui est raccordé en amont à l'alimentation en eau de la ville) pénètre et est solidarisée la tubulure 6 qui est elle-même enfermée dans le corps de robinet 7 réalisé en deux parties, dont un corps cylindrique 8 refermé par un bouchon 9 rapporté par vissage sur le corps principal cylindrique 6. Ce dernier est prolongé vers le bas par le tube de raccordement 10 recevant le tube de descente 11.

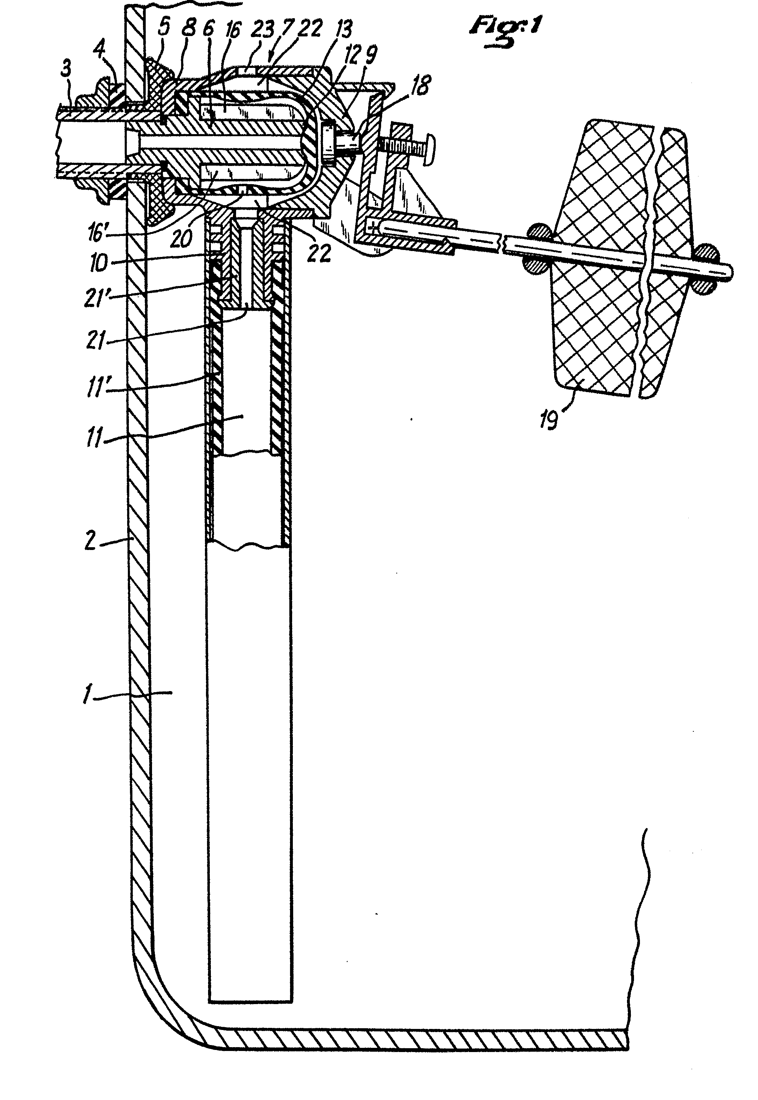

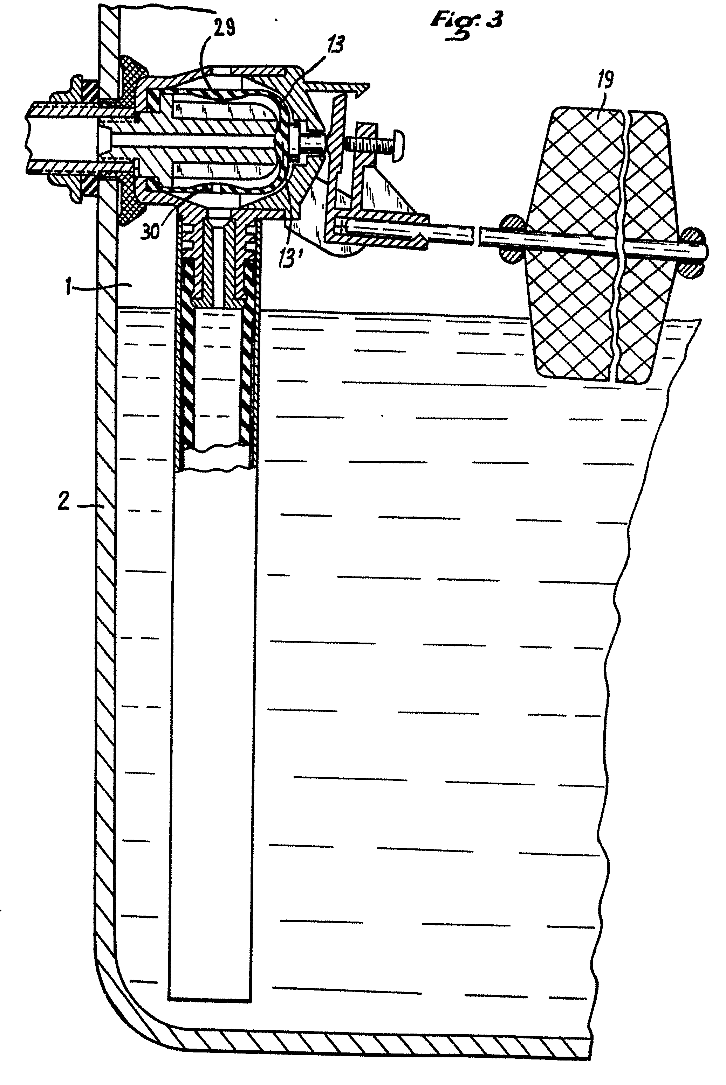

La tubulure 6 débouche à l'intérieur du corps de robinet et sa section d'extrémité 12 constitue le siège de l'obturateur formé de la membrane 13 élastiquement déformable. Cette membrane est constituée d'un sac ou poche de forme générale cylindrique ainsi qu'on le voit aux figures 1 et 3. Le cylindre est refermé par un fond 13' muni d'une zone centrale renforcée qui constitue l'obturateur venant s'appliquer sur le siège 12.

Du côté opposé au fond renforcé 13' la poche 13 est montée sur un disque transversal 14 venu de la tubulure 6 et les bords 15 de la poche, formant un retour vers le centre, sont emprisonnés entre ce disque 14 et le corps de robinet 8 en refermant ainsi l'enceinte constituée par l'espace intérieur de la membrane 13.

La tubulure 6 comporte des ailettes radiales 16 ,16', par exemple selon une section cruciforme, définissant des zones d'appui pour la membrane 13.

La membrane referme la tubulure d'arrivée 6, ainsi qu'on le voit sur la figure 3, lorsque le poussoir 18, actionné par exemple par le flotteur 19, repousse la membrane et sa partie renforcée 13' sur le siège 12.

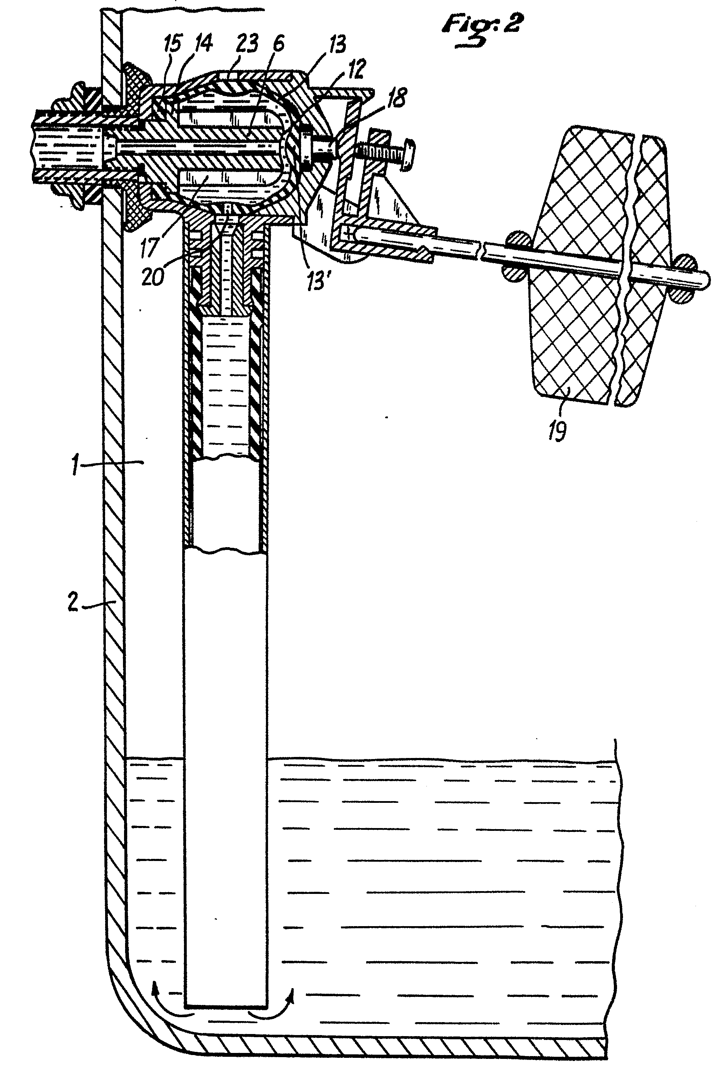

Lorsque, ainsi qu'on le voit sur la figure 2, le poussoir est relâché, la membrane est alors écartée de son siège 12 et le fluide remplit l'espace intérieur 17 de la membrane.

Il s'échappe par l'ouverture 20 disposée à la base de la membrane et au débouché de la conduite 10 raccordée en T sur le corps de robinet 7 et se prolongeant par le canal d'évacuation ou de descente 11.

Le canal d'évacuation 11, de même que le passage 21 dans la conduite 10, sont garnis d'un chemisage intérieur respectivement 11' et 21' en matériau à propriété d'isolation phonique tel qu'un revêtement tubulaire en résine élastomère.

Ainsi, selon une caractéristique importante de l'invention, on voit que dans tout son trajet à partir du siège 12, le liquide court le long de parois qui sont revêtues ou constituées d'un matériau élastiquement déformable et à propriété anti-phonique, par exemple en résine élastomère, ce qui s'oppose à toute formation et propagation d'ondes sonores.

On voit que dans la position de passage de l'eau telle qu'elle est représentée à la figure 2, la membrane 13 est dilatée sous l'effet de la pression de l'eau sortant de la tubulure 6 et elle est plaquée contre la chambre 22 que constitue l'espace intérieur du corps de robinet 7. Dans cette position, le passage inférieur 20 disposé à la base de la membrane 13 vient se positionner face au débouché du conduit 10 et l'eau est donc transmise directement depuis l'espace intérieur de l'enceinte 17 formée par la membrane 13 vers le canal 21 puis le tube 11 en suivant toujours des parois chemisées en matériau élastomère, ce qui , comme exposé ci-dessus, évite et la formation de vibrations dans le matériau et par conséquent la transmission d'ondes sonores.

Selon une caractéristique importante de l'invention, le corps de robinet comporte dans sa partie supérieure un passage à l'air libre 23.

Dans la position de fermeture du robinet, telle qu'on la voit à la figure 3, la membrane étant ramenée en position contre les ailettes cruciformes, l'espace intérieur 22 de la chambre constitué par le corps de robinet se trouve ainsi à l'air libre; de sorte qu' en cas de défaillance de l'obturateur, la conduite d'alimentation 3 ne peut se trouver directement en prise avec le liquide remplissant le réservoir 1 puisque, entre cette conduite 3 et le canal 11 plongeant dans le réservoir, se trouve interposée la chambre 22 mise à l'air libre par le passage 23.

Ainsi, en cas de dépression dans la conduite d'alimentation 3 conjuguée avec une défaillance de l'obturateur, la dépression aspirera l'air depuis la chambre 22 par le passage 23.

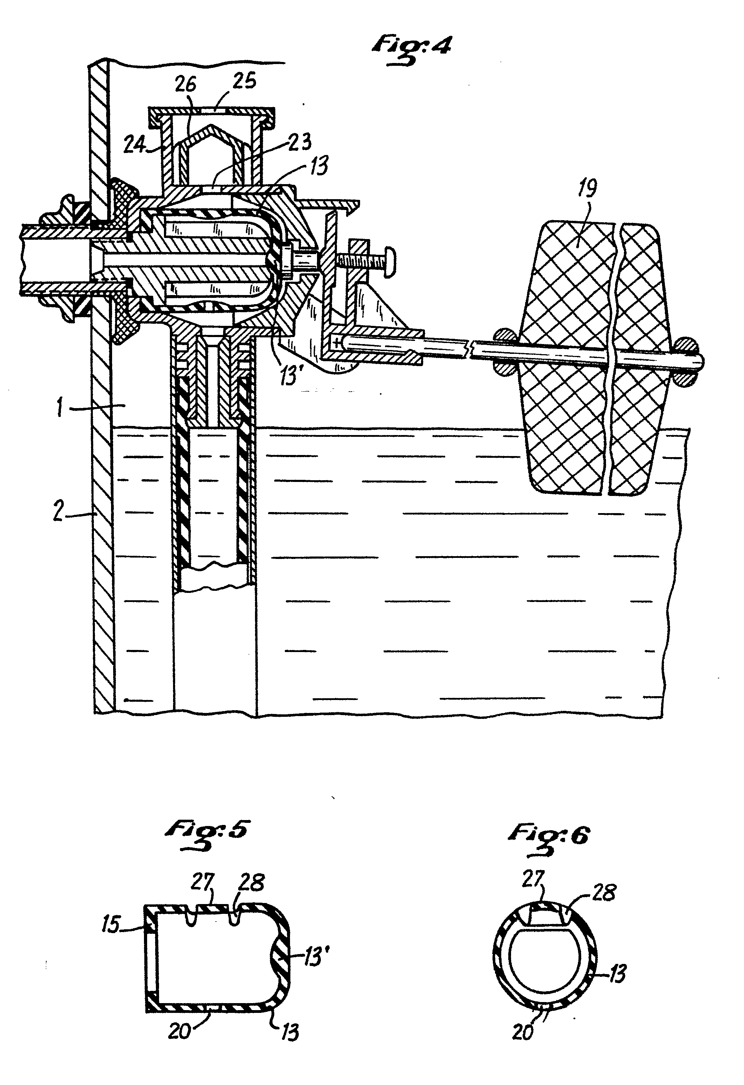

On peut avantageusement, ainsi qu'on le représente à la figure 4, compléter le dispositif constitué par le passage 23 par une chambre "casse-vide" 24 dans laquelle débouche le passage 23, la chambre étant elle-même à l'air libre par son sommet et par la cheminée 25.

La chambre comporte un flotteur 26; en cas d'échappement inopiné d'eau par le passage 23, par exemple par suite d'une défaillance de la membrane d'obturation écartée du passage 23, l'eau s'élevant depuis le passage 23, dans la chambre 24, provoquera le soulèvement du flotteur 26 dont le cône supérieur viendra en position d'obturation sur la cheminée 25 en s'opposant par conséquent à tout écoulement parasite ou indésirable de liquide.

Une forme de réalisation de la membrane est représentée aux figures 5 et 6 et dans cette forme de réalisation la partie supérieure de la membrane faisant face au passage 23 est prévue d'un dispositif d'obturation spécifique de ce passage et formé d'une pastille centrale 27 séparée du corps de la membrane par une rainure 28 de section en forme générale de V ou de U; la rainure est elle-même définie par un voile de matière d'épaisseur plus faible que la pastille centrale ou la paroi formant la membrane, ce qui donne une élasticité plus grande à la pastille centrale 27 par rapport au corps de la membrane.

Ainsi, lors de la mise sous pression de la membrane, l'obturateur étant écarté du siège et l'eau pénétrant sous pression à l'intérieur de la poche, la pastille centrale 27 peut se déplacer vers le haut en venant se plaquer sous le passage 23 qu'elle obture; ceci permet de s'assurer du fonctionnement indépendant de l'obturation du passage 23 dans le cas notamment où les caractéristiques de la résine élastomère utilisée pour réaliser la membrane ne permettrait pas d'obtenir des conditions de résilience et d'élasticité suffisantes; dans ce cas, le comportement autonome de la pastille d'obturation 27, grâce à la rainure périphérique 28 permettrait de s'assurer que l'obturation de la prise d'air 23 intervient toujours dès l'ouverture du robinet.

Selon l'exemple des figures 1 à 4, la membrane 13 comporte avantageusement des zônes renforcées 29 et 30 disposées sensiblement au milieu des faces respectivement supérieure et inférieure. Le renfort inférieur 30 est traversé par l'ouverture 20 d'évacuation de l'eau.

La zône renforcée 29, 30, outre le fond 13', peut être constituée d'un bourrelet intérieur formant anneau.

REVENDICATIONS

1.    Robinet à fonctionnement silencieux, caractérisé en ce que le corps du robinet comporte une membrane souple en forme de poche (13) en matériau élastiquement déformable, dans laquelle débouche l'extrémité d'une tubulure (6) débitant le fluide et raccordéeà la canalisation d'alimentation amont (3), ladite poche élastiquement déformable constituant une enceinte (17) d'écoulement dans laquelle est débité le fluide par l'extrémité de la tubulure (6), et ladite poche comporte une solution de continuité (20) pour l'échappement aval du fluide.

2.    Robinet selon la revendication 1, caractérisé en ce que la section terminale (12) de ladite tubulure (6) constitue le siège récepteur de l'obturateur formé par une zone (13') de ladite membrane en forme de poche (13) et l'ouverture d'échappement (20) est disposée perpendiculairement par rapport à l'axe d'écoulement du fluide défini par la tubulure (6).

3.- Robinet selon l'une des revendications 1 ou 2, caractérisé en ce que la tubulure (6) constituant le siège du robinet est prévue d'axe sensiblement horizontal et l'ouverture d'échappement (20) disposée dans la membrane (13) en forme de poche est disposée à la base constituant la partie inférieure de ladite poche et elle est positionnée face à l'ouverture supérieure d'un tube vertical (10,11) débouchant à la base du récipient (2) à alimenter et destiné à guider l'écoulement vertical du fluide en remplissant le récipient.

4.- Robinet selon l'une des revendications 1,2 ou 3, caractérisé en ce que le tube vertical de sortie (10,11) et conduisant à la base du récipient (1) à alimenter est chemisé intérieurement par un revêtement (21',11') en matériau à propriété d'isolation phonique, par exemple en matériau élastiquement déformable tel qu'une résine élastomère.

5.- Robinet selon l'une quelconque des revendications 1 à 4, caractérisé en ce que la membrane d'obturation (13) en forme de poche a la forme générale d'un corps de révolution, par exemple cylindrique, concentrique et extérieur à la tubulure (6) formant le siège (12) du robinet, ladite poche étant refermée par un fond (13') comportant une paroi renforcée et constituant l'obturateur face au siège (12) formé par la section ouverte de ladite tubulure, les bords libres (15) de la poche, du côté opposé au fond d'obturation, étant solidaires d'un disque (14) concentrique et solidaire de la tubulure centrale (6) en refermant ainsi l'enceinte (17) d'écoulement du fluide constituée par ladite poche.

6.- Robinet selon l'une quelconque des revendications 1 à 5, caractérisé en ce que la membrane d'obturation (13) élastiquement déformable et en forme de poche est disposée à l'intérieur d'un corps de robinet (7) conformant une chambre (22) contenant et entourant à faible distance ladite membrane (13) en forme de poche, et ladite chambre d'une part et ladite membrane d'autre part sont conformées et dimensionnées de telle façon qu'à l'état de repos, la membrane étant en appui sur son siège et le robinet étant ainsi en position de fermeture, la membrane (13) en forme de poche est maintenue écartée de la paroi intérieure de ladite chambre (22), tandis qu'à l'état d'ouverture, la membrane (13) étant libérée de sa position d'appui sur son siège (12), et le liquide s'écoulant, ladite membrane (13) est dilatée et plaquée par la pression du fluide, contre la paroi intérieure de ladite chambre (22), et la chambre comporte un passage (23) communiquant avec l'atmosphère, ledit passage étant obturé par la membrane élastique (13) lorsque cette dernière est amenée en position dilatée lors de l'ouverture du robinet, le passage communiquant avec l'atmosphère constituant un dispositif antiretour et évitant le rétrosiphonnage du liquide contenu dans le récipient alimenté par le robinet.

7.- Robinet selon l'une quelconque des revendications 1 à 6, caractérisé en ce que la tubulure d'écoulement (6) dont la section terminale constitue le siège (12) récepteur de la membrane élastique d'obturation comporte des ailettes (18,18') radiales s'étendant longitudinalement depuis ladite tubulure et dont les bords longitudinaux constituent des surfaces d'appui de la membrane élastique (13) d'obturation à l'état de repos.

8.- Robinet selon l'une des revendications 1 à 7, caractérisé en ce que la membrane d'obturation (13) est commandée par un poussoir (18) traversant le corps de robinet (7) et actionné depuis l'extérieur, le poussoir étant déplaçable linéairement selon un axe situé dans le prolongement de l'axe de la tubulure (6) d'écoulement formant le siège (12) du robinet, le poussoir étant apte à porter par son extrémité disposée à l'intérieur du corps du robinet contre la partie (13') renforcée du fond de la poche formant la membrane (13) élastique d'obturation pour amener ce fond d'obturation en position d'appui sur le siège (12).

9.- Robinet selon l'une quelconque des revendications 1 à 8, caractérisé en ce que la chambre formée (22) par le corps de robinet (7) et contenant la tubulure-siège (6) et la membrane élastique (13) d'obturation a une forme biconique et le cercle médian constituant la base commune des deux cônes opposés comporte d'une part en partie supérieure le passage (23) de mise à l'air libre et en partie inférieure le débouché du tube (10, 11) formant canal conduisant au fond du récipient, et d'autre part au moins un bourrelet (29, 30) annulaire de renforcement.

10.- Robinet selon l'une quelconque des revendications 1 à 9,
caractérisé en ce que la membrane (13) élastique d'obturation comporte, face au passage supérieur (23) de mise à l'air libre de la chambre (22) contenant ladite membrane (13), une zône apte à constituer obturation dudit passage et formée d'une partie centrale (27) formant pastille d'obturation séparée du corps de la membrane par une rainure circulaire (28) constituée d'un voile de matière raccordée d'une part au corps de la membrane (13) vers l'extérieur et ladite pastille (27) vers l'intérieur, la rainure circulaire ayant une section en forme générale de V ou de U et étant d'épaisseur inférieure au corps de la membrane en permettant un mouvement élastique autonome de ladite pastille (27) d'obturation centrale par rapport au corps de la membrane vers sa position d'obturation contre l'ouverture (23) dudit passage.

*Fig:1*

*Fig. 2*

*Fig: 3*

0095424

*Fig:4*

*Fig:5*

*Fig:6*

8348 —

Office européen
des brevets

**RAPPORT DE RECHERCHE EUROPEENNE**

**0095424**
Numéro de la demande

EP  83 40 1043

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-2 869 572  (J.E. PERSON)  * Revendications 1,2,3 * | 1,2,5, 6 | F 16 K   31/24 F 16 K    7/16 F 16 K   47/02 |
| A | US-A-3 426 789  (GARDENA RUBBER CO.) * Revendication 1 * | 1 | |
| A | US-A-2 831 497  (R.P. SKERRITT) | | |
| A | US-A-2 294 785  (J.D. LANGDON) | | |
| A | US-A-3 930 516  (V.D. FLINNER) | | |
| A | DE-C-  568 753 (TRITONWERKE-BAMBERGER, LEROI AG.) | | |
| A | CH-A-  370 718  (P. BIGINELLI) | | |

**DOMAINES TECHNIQUES RECHERCHES (Int. Cl. ³)**

F 16 K   31/00
F 16 K    7/00
F 16 K   47/00
E 03 D    1/00

Le présent rapport de recherche a été établi pour toutes les revendications

| Lieu de la recherche LA HAYE | Date d'achèvement de la recherche 06-09-1983 | Examinateur DE SMET F.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82